# EUROPEAN PATENT SPECIFICATION

(11) **EP 1 756 937 B1**
(45) Date of publication and mention of the grant of the patent: **18.01.2012**
(21) Application number: 05754876.0
(22) Date of filing: 13.06.2005
(51) Int. Cl.: H02P 9/04, H02M 5/458

(54) **GROUND POWER UNIT**
BODEN-STROMVERSORGUNGSEINHEIT
GROUPE ELECTROGENE

(30) Priority: 15.06.2004 DK 200400923
(43) Date of publication of application: 28.02.2007
(73) Proprietor: AXA Power ApS, 5270 Odense N (DK)
(72) Inventor: DAHL, Soeren, Risgaard,, DK-5250 Odense SV (DK); NIELSEN, Bo, Vork, DK-5462 Morud (DK); OLSSON, Henrik, DK-5250 Odense SV (DK)
(74) Representative: Meissner, Bolte & Partner
(86) International application number: PCT/IB2005/001644
(87) International publication number: WO 2005/124990

(56) References cited:
- EP-A- 1 168 594
- EP-A- 1 244 204
- US-A- 5 703 410

## Description

### FIELD OF THE INVENTION

The present invention relates to a ground power unit for supply of electrical power to an aircraft on the ground. More specifically it relates to an engine driven ground power unit with improved performance.

### BACKGROUND OF THE INVENTION

During flight, one or more generators fied to the output of the aircraft propulsion system generate the electrical power required in the aircraft. On the ground, however, a Ground Power unit (GPU) that couples to the aircraft electrical system supports the aircraft electrical requirements.

Engine driven ground power units are well known. Typically, the units are driven by a diesel engine running at 2400 rpm and having an alternator with 20 poles that produces the desired 3-phase 400 Hz alternating output voltages.

It is a disadvantage of the known units that the alternator is complex and expensive due to the large number of poles required for provision of a 400 Hz output at the obtainable engine speed. It is desired to lower the engine speed in order to lower acoustic noise and fuel consumption; however, according to the prior art, this is obtained at the expense of an increased number of alternator poles. For example, ground power units running at 1500 rpm with a 32-pole alternator and at 2000 rpm with a 24-pole alternator are known.

EP 1 168 594 A2 discloses generally an engine operated generator, which might possibly also be used as a ground power unit, comprising a frequency converter and a controlling means which is adjusted to control the number of revolutions of an engine in response to a load and variation in temperature. This document discloses all the features of the preamble of claim 1.

### SUMMARY OF THE INVENTION

It is an object of the present invention to provide a ground power unit with Improved performance in relation to prior art units.

It is a further object of the present invention to provide a ground power unit with an alternator with a reduced number of poles, for example an alternator intended for generation of a 50/60 Hz output voltage. Such units are mass-produced at a considerably lower cost than the more complex alternators used in known ground power units. The present invention is set forth in claim 1.

According to the present invention the above-mentioned and other objects are fulfilled by an integrated ground power unit comprising a housing enclosing an engine drive, and an AC or a DC generator driven by the engine drive for generation of a DC or an alternating first voltage of a first frequency.

The generator may be an alternator that for example generates a 50 Hz output voltage when the engine runs at 1500 rpm.

Preferably, the engine is driven by fuel, such as diesel, natural gas, petrol, etc., and rotating a shaft coupled to the generator whereby electrical power is generated. A diesel engine is presently preferred due to its superior operational lifetime. Typically, a ground power unit will be running 10 hours a day, 7 days a week, i.e. 3650 hours per year, and thus a high operational lifetime is required for the unit. In order to obtain a desired high lifetime, a low engine speed taking the actual load into account and resulting in low engine wear is preferred and thus, it is preferred that the engine speed is lower than 2400 rpm.

The AC or DC generator output voltage is connected to a frequency converter for generation of a stabilized multi-phase alternating second voltage of a stabilized second frequency. The second voltage may for example be a 3-phase 400 Hz/115 Vₙₘₛ output voltage.

If the frequency converter is supplied from a DC generator, the frequency converter comprises an inverter for reception of the DC output voltage from the DC generator and for provision of the second voltage of the second frequency.

If the frequency converter is supplied from an AC generator, such as an alternator, the frequency converter may be a direct AC - AC converter, or the frequency converter may comprise a rectifier connected to the alternator output for reception of the first voltage and provision of a rectified DC voltage to the input of an inverter for provision of the second voltage of the second frequency.

In a preferred embodiment, the output voltage as generated by the generator is supplied directly to the frequency converter without provision of circuitry connected between the generator output and the frequency converter input for further regulation of the voltage supplied to the frequency converter.

It is an important advantage of the present invention that utilisation of a frequency converter makes it possible to use a low frequency alternator generating a low frequency output in the ground power unit. Such units are readily available even at a low cost compared to the more complex alternators used in conventional ground power units.

It is another important advantage of the present invention that the frequency converter provides a stabilized multi-phase voltage output so that variations in the alternator output frequency or output voltage substantially do not influence the output of the ground power unit. Thus, it is possible to adjust the engine speed, e.g. in order to improve fuel consumption, lower noise, lower emission of contaminants, etc., without changing the frequency of the voltage output. Thus, under normal operating conditions, the output voltage is substantially independent of the engine speed.

Further, the ground power unit has a controller for ground power unit management for adjustment of various parameters of the ground power unit in accordance with current operating conditions, such as the actual load, abrupt load changes, etc.

According to the invention, the controller for ground power unit management is adapted to adjust the engine speed in response to a load change in such a way that fuel consumption is substantially optimized, i.e. upon a load change, the controller adjusts the engine speed to that value selected from a set of possible engine speed values that results in the most desirable value of fuel consumption.

Thus, ground power unit management includes control or optimisation of the fuel consumption of the unit.

Preferably, the ground power unit comprises a cooling device for cooling of the engine. The cooling device may be a fan directly driven by the engine thereby providing increased cooling with increased engine speed. If the increased cooling is not required, the controller may, in another embodiment, individually control the cooling device, e.g. a fan may receive electrical power from the ground power unit and may have an input controlled by the controller for adjustment of the fan speed, e.g. in response to engine temperature measurements provided to the controller by temperature sensors, thereby saving fuel, lowering exhaust emission, and lowering acoustic emission.

For ground power unit management, the controller has a number of control outputs for control of any combination of the engine, the engine cooling device, the generator, and the frequency converter. The controlled parameters include at least one of the following: engine speed, engine fan speed, individual phase angle of the output voltage, individual phase voltage, generator output voltage, frequency converter switching frequency, etc.

The controller may reside in a single unit in the ground power unit, or it may be distributed in a plurality of separate units, e.g. incorporated into appropriate parts of the ground power unit, such as the engine, the generator, the frequency converter, the fan, the operator interface, etc, preferably controlled by a master control unit.

The available engine power is a function of engine speed. Typically, engines have higher output power at higher speed. For example, in an embodiment of the present invention, the engine-alternator pair running at 1500 rpm has an output frequency of 50 Hz and an output frequency of 60 Hz running at 1800 rpm. Typically, the output power at 1800 rpm is 8 -12 % higher than the output power at 1500 rpm.

The controller may be adapted to control the engine speed as a function of the load, e.g. to obtain improved fuel consumption, lowered acoustic noise, lowered emission, etc., or a desired combination hereof.

In one embodiment of the invention, the controller is adapted for adaptive control of the engine speed, to obtain minimum fuel consumption for a given load. Upon a load change, the controller iteratively determines the engine speed providing substantially minimum fuel consumption at the actual load. The controller may start the iteration by determining the fuel consumption for the engine operating at its current speed, e.g. the actual fuel consumption may be provided by a fuel flow meter. Then, the controller may adjust the engine speed to a new value and determine the fuel consumption at the new value of the engine speed. This is repeated for several engine speed values, and finally, the controller selects the engine speed with the least fuel consumption. The engine speed stays at the selected value until the load is changed and the iteration described above is re-started.

In this way, the engine speed may be varied over the entire operating range of the engine, or another strategy for variation of the engine speed may be selected, e.g. increasing and decreasing the engine speed and selecting the direction of engine speed change with improved fuel consumption so that the time period used for selection of the engine speed is decreased. The fuel consumption determinations may be stored in a table in a memory of the controller for later access by the controller, the table comprising values of the fuel consumption as a function of the load and engine speed. The engine speed iteration described above is modified to start with adjustment of the engine speed to a value determined by a table look-up, determination of the fuel consumption at this value, followed by engine speed iteration as already described. Typically, the end result will differ from the table look-up value, since the optimum engine speed, apart from the actual load, also depends on temperature, pressure, wear and tear, etc. The table look-up is a short cut providing a faster determination of the engine speed with minimum fuel consumption.

The table may be determined during manufacturing of the ground power unit.

The engine speed step size may be constant within the operating range of the engine, or, alternatively, the step size may be varied, e.g. as a function of determined changes in fuel consumption. The step size may be decreased upon determination of large changes in fuel consumption and increased upon determination of small changes in fuel consumption.

The larger the step sizes the smaller the number of values of engine speed actually used during operation of the unit.

For example in a simple embodiment of the invention, the controller is adapted to run the engine at two different speeds only, namely 1500 rpm and 1800 rpm. Thus, the controller may be adapted to run the engine at 1800 rpm at no load so that the engine is ready for provision of a high power output and thereby able to cope with a load change from zero load to full load when the load is connected. Upon connection of the load and when the load is in the range from 60 % - 100 % of the intended full load, the controller is adapted to reduce the engine speed to 1500 rpm. During an overload, e.g. the load increases to 100 % - 125 % of the intended full load; the controller is adapted to increase the engine speed to 1800 rpm.

Depending on the power rating of the engine, other engine speeds than 1500 rpm and 1800 rpm may be selected, e.g. for optimum fuel consumption, minimum acoustic noise, minimum emission, etc., or any combination hereof.

Likewise, the load percentages given above may be substituted by other values depending on the characteristic of the engine in question.

Fuel consumption may be combined with one or more other parameters for optimum adjustment of the ground power unit, such as acoustic noise, e.g. based on a known function of engine speed, or as sensed by a microphone, mechanical vibrations, e.g. based on a known function of engine speed, or as sensed by an accelerometer, emission of contaminants, e.g. as sensed by an emission sensor, or another desired parameter of the ground power unit, or any desired combination hereof, in the controller's adjustment of ground power unit, such as adjustment of the engine speed in response to the load. The above-mentioned known functions may be stored in a respective table in a memory of the controller. In one embodiment, the functions are functions of the engine speed, and the ratios between noise and engine speed and between mechanical vibrations and engine speed are stored in a memory of the controller.

The efficiency of the generator depends on the engine speed and the generator output voltage. Thus, the controller may further be adapted to control the output voltage of the generator, e.g. by control of magnetizing of the generator.

The efficiency of the frequency converter depends on the switching frequency, the generator output voltage and frequency input to the frequency converter. Thus, the controller may also be adapted to control the switching frequency of the frequency converter.

Thus, the controller may be adapted for individually controlling the engine, the fan, the generator, and the frequency converter in such a way that the total efficiency of the unit is substantially maximized.

The performance may be defined as a function of a number of ground power unit parameters, such as fuel consumption, acoustic noise, emission of contaminants, etc. For example, the controller may be adapted to control engine speed, generator voltage, frequency converter switching frequency, fan speed, etc., to obtain improved performance of the ground power unit.

In the event that the load increases and exceeds the power rating of the engine at the current engine speed, the controller may further be adapted to decrease the second voltage, i.e. the output voltage of the frequency converter and thereby the output current, i.e. the load, in response to the load increase until the speed of the engine has increased to a speed sufficient to provide the required output power whereby overload of the engine is substantially prevented. In one embodiment, the controller controls the output current to be limited corresponding to the maximum output power that may be supplied by the engine at the current speed. If the set maximum current is reached, the output voltage will decrease until the engine speed has been increased to a level sufficient for supplying the required output power, or, until the load eventually decreases again.

Further, the controller may be adapted to adjust the engine speed providing a maximum output power that is greater than the power consumed by the actual load, e.g. 10 % greater than the power consumed by the actual load so that extra power is immediately available in case of a load increase.

The strategy for selection and adjustment of engine speed performed by the controller may reduce the required output power rating of the engine. For example, a smaller engine may be utilised than would otherwise have been possible as long as the requirement of the voltage required by the aircraft is fulfilled.

In one embodiment of the invention, the ground power unit may further comprise an energy reservoir supplying energy to the frequency converter, e.g. upon load increases until the engine speed has been adjusted for provision of the required output power to the load whereby the second voltage is further stabilized. The controller may for example be adapted to increase the engine speed when the energy stored decreases below a predetermined threshold value, e.g. as indicated by the DC voltage output of an energy reservoir comprising capacitors or batteries.

The energy reservoir may have a capacity sufficient for supplying the required output power to the intended load, and the controller may further be adapted for controlling the engine between a running state and a stopped state intermittently. During the running state, the engine supplies the required output power for the load and for storage of energy in the energy reservoir, and during the stopped state, the energy reservoir supplies the required output power for the load. Hereby, the engine may be run intermittently at a single optimal speed.

The energy reservoir may comprise batteries, capacitors, a flywheel, etc.

The housing of an embodiment with an alternator may further comprise a connector connected to the alternator output for provision of an auxiliary power output, whereby, e.g., a 50 Hz or 60 Hz three-phase voltage output may be provided.

The housing may further comprise a connector connected to the frequency converter input for provision of an auxiliary power input. Typically, it is not allowed to run an engine in a hangar. The provision of an auxiliary power input makes the ground power unit useful in a hangar also, since it may be supplied from a mains outlet in a hangar by connection of the outlet to the auxiliary power input.

Today's aircrafts may comprise significant single-phase loads making the total load of the aircraft asymmetric. Preferably, the frequency converter facilitates individual phase regulation of each of the phases of the second voltage, and the controller is adapted for individual phase regulation of each of the phases of the second voltage so that the voltage output of each of the phases remains substantially independent of the load including asymmetry of the load. Such a method is disclosed in US 6,628,014, which is hereby incorporated by reference.

For further improvement of the quality of the voltage output of the ground power unit according to the present invention, the controller may further be adapted for active suppression of harmonic distortion of the second voltage, e.g. due to a non-linear load.

In a preferred embodiment, the third and fifth harmonic of the voltage output are determined by the controller, and the controller is adapted to control the frequency converter to generate third and fifth harmonics in opposite phase to the determined third and fifth harmonic thereby substantially cancelling the third and fifth harmonics of the ground power unit output voltage.

The ground power unit according to the present invention has improved performance compared to known units. For example, it is an important advantage of the preferred embodiment that it provides a high quality voltage output due to its capability to provide a stable voltage robust against load changes, its capability to individually control each phase voltage to provide a stable voltage robust against an asymmetric load, and its capability of suppressing harmonic distortion of the output voltage, e.g. caused by a non-linear load.

In a preferred embodiment of the invention, the controller is further adapted for controlling the phase of the frequency converter output for no-break power transfer connection to the load. Typically, in some aircraft on the ground, power supply is transferred from the on-board power generating systems, such as engine driven generators, to the ground power unit while both systems are running simultaneously for a brief time period. Due to possible phase misalignment between the aircraft and the ground power unit, the ground power unit must be able to adjust its output phase to correspond with the on-board generated phase when the connection is actually made, to remain on line throughout the connection process and to provide the proper voltage and frequency to the aircraft while at the same time preventing any failure or damage to either power system. In one embodiment, the output current is sensed to determine whether the ground power unit is leading or lagging with respect to the on-board power. Then the frequency of the frequency converter is adjusted correspondingly until the phases of the two systems are aligned, preferably within 100 µs, whereby a no-break power transfer is performed.

A similar disconnection process may be performed upon power up of the aircraft on-board power generation system.

It is an important advantage of the preferred embodiment that the unit couples to a load with no break power transfer without mechanical stressing the motor, the generator and the aircraft.

Still further, the controller may be adapted for controlling the phase of the frequency converter output for connection in parallel with other ground power units.

Preferably, simply parallel coupling of the outputs of the ground power units performs the phase adjustment automatically. For example, it has been shown that active power flow between two units coupled in parallel is essentially caused by phase angle differences, while the reactive power flow is essentially caused by voltage amplitude differences. Thus, the controller of the individual ground power units may be adapted to adjust the output voltage slightly as a function of the reactive load in such a way that the voltage decreases slightly and within allowable tolerances in response to an increase of the reactive load. Likewise, the individual controllers may be adapted to adjust the output frequency slightly as a function of the active load in such a way that the frequency decreases slightly and within allowable tolerances in response to an increase of the active load. In case that two parallel-coupled units do not share a load equally, the unit supplying the least amount of power will have the highest output voltage and the highest output frequency, and therefore it will try to take over the load, until equal load sharing is obtained.

It is an important advantage of the preferred embodiment that power sharing between units coupled in parallel is provided. Typically, this is not provided by a 400 Hz engine driven ground power unit.

### BRIEF DESCRIPTION OF THE DRAWINGS

- Fig. 1: is a photo of an embodiment of the invention,
- Fig. 2: shows a blocked schematic of a preferred embodiment,
- Fig. 3: shows a blocked schematic of the frequency converter topology, and
- Fig. 4: shows plots of frequency and output voltage as a function of active and reactive load, respectively.

### DETAILED DESCRIPTION OF PREFERRED EMBODIMENTS

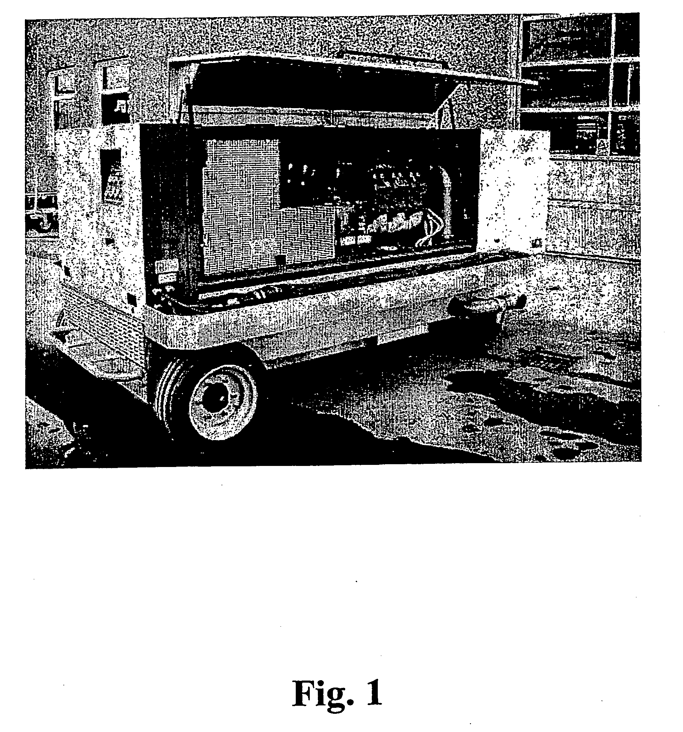

Fig. 1 is a photo of an integrated power unit according to the invention. This embodiment of the ground power unit is towable (tow bar not shown). The cable for connection to the aircraft is clearly visible on the tray and a part of the operator interface with actuator buttons is also visible at the rear. The unit weighs around 3650 kg and its dimensions are app. 1.7 m * 3.5 m * 1.9 m (H*L*W).

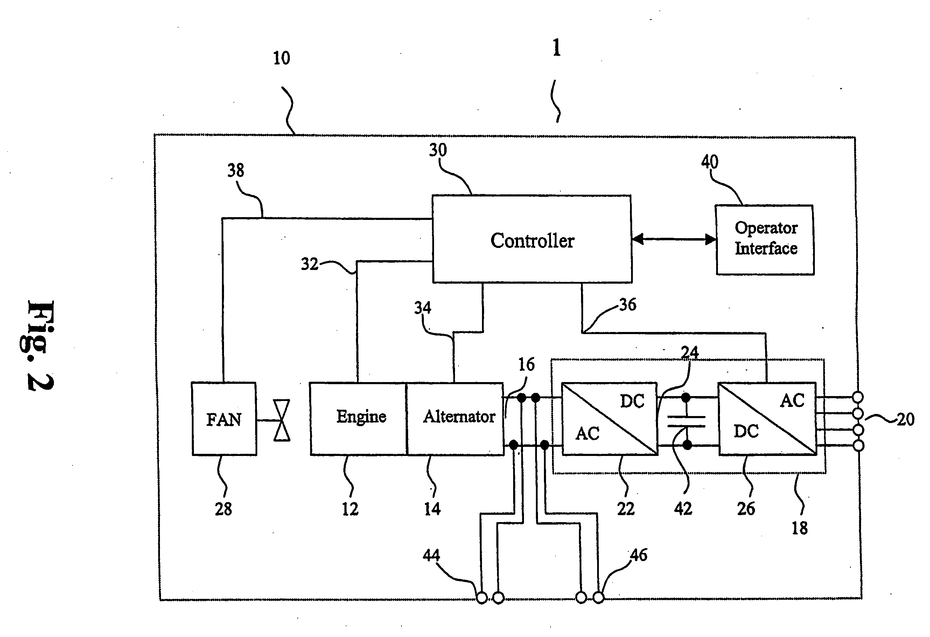

Fig. 2 is a blocked schematic of the integrated power unit 1 shown in Fig. 1. The unit 1 comprises a housing 10 enclosing an engine 12 driving an alternator 14 for generation of an alternating first voltage of a first frequency 16. The alternator may for example generate a 50 Hz output voltage when the engine runs at 1500 rpm. In the illustrated embodiment, the engine is a Deutz model BF6M1015C turbocharged V6 engine, six cylinders and 4-stroke diesel engine. The engine is controlled via a digital Deutz EMR2 control unit that communicates with the main ground power unit controller via CAN interface. The alternator is a Stamford synchron permanent magnet generator (PMG) excited automatic voltage regulator (AVR) controlled generator model UCI 274 H1 (single bearing) with series start (Wye) connection of mains stator windings.

The alternator output voltage 16 is connected to a frequency converter 18 for generation of a stabilized multi-phase alternating second voltage of a stabilized second frequency 20 to be connected to a load, such as the power distribution system of an aircraft. The second voltage 20 is a 3-phase 400 Hz/115 Vᵣₘₛ output voltage.

In the illustrated embodiment 1, the frequency converter 18 comprises a rectifier 22 connected to the alternator output 16 for reception of the first voltage and provision of a rectified DC voltage 24 that is supplied to a switched inverter 26 for provision of the second voltage of the second frequency 20.

Further, a fan 28 is positioned for cooling of the engine.

The ground power unit 1 has a controller 30 for ground power unit control management responding to the actual load value and changes in the load value.

The controller 30 is further connected to an operator interface 40 with actuator switches and displays for inputting operator commands to the unit and for displaying various states of the ground power unit to the operator.

Ground power unit management may include control of the fuel consumption of the unit, control of emission from the unit, control of acoustic noise emitted by the unit, control of the efficiency of the unit, etc.

For ground power unit management, the controller 28 has at least one control output 32 for control of the engine 12, such as engine speed, and at least one control output 34 for control of the alternator 14, such as alternator output voltage, and at least one control output 36 for control of the frequency converter 18, such as switching frequency, and a control output 38 for control of fan speed. Further, the controller 30 is capable of controlling the phase angle of the output 20, and of individually controlling each of the output voltages of the output phases 20.

In the illustrated embodiment of the invention, the controller 30, upon a load change, iteratively determines the engine speed providing substantially minimum fuel consumption at the actual load. The controller 30 starts the iteration by determining the fuel consumption for the engine operating at its current speed, e.g. the actual fuel consumption may be provided by a fuel flow meter. Then, the controller 30 varies the engine speed in steps and determines the fuel consumption at each new engine speed. The engine speed is varied over the entire operating range of the engine. Finally, the controller 30 selects the engine speed with the least fuel consumption. For example, the unit starts at 1500 rpm upon turn-on so that sufficient power may be supplied to any load within the specified range. Upon determination of current fuel consumption, the engine speed is lowered by 25 rpm to 1475 rpm, and again the fuel consumption is determined. This is continued until a predetermined minimum engine speed is reached. The predetermined minimum engine speed depends on the actual load. In the present example, for a load ranging from 0 kW to 50 kW, the minimum speed is 1300 rpm. For a load ranging from 50 kW to 80 kW, the minimum speed is 1350 rpm. Finally, for a load that is greater than 80 kW, the minimum speed is 1400 rpm. This prevents choking of the engine upon a sudden increase of the load. When the actual minimum speed has been reached, the controller 30 adjusts the engine speed to the one with the minimum determined fuel consumption.

The engine speed remains unchanged until a load change occurs. If the load change is within the range from - 8 kW to + 8 kW, the engine speed still remains unchanged. If the magnitude of the load change is greater than 8 kW, optionally provided that the load change remains grater than 8 kW for more than a predetermined time period, such as 20 seconds, the measurement sequence described above is repeated, i.e. the controller 30 increases the engine speed to 1500 rpm and determines the fuel consumption. The engine speed is lowered to 1475 rpm and the fuel consumption is determined, etc.

The fuel consumption determinations may be stored in a table in a memory of the controller 30 for later access by the controller 30, the table comprising values of the fuel consumption as a function of the load and engine speed. The engine speed iteration disclosed above then starts with adjustment of the engine speed to a value determined by a table look-up and determination of the fuel consumption at this value followed by engine speed iteration as disclosed above. Typically, the end result will differ from the table look-up value, since the optimum engine speed, apart from the actual load, also depends on temperature, pressure, wear and tear, etc. The table look-up is a short cut providing a faster determination of the engine speed with minimum fuel consumption.

The table may be determined during manufacturing of the ground power unit.

In the illustrated embodiment, the ground power unit has an.energy reservoir 42 of batteries supplying energy to the inverter 26, e.g. upon load increases, until the engine speed has been adjusted for provision of the required output power to the load whereby the second voltage is further stabilized.

The housing 10 has a connector 44 connected to the alternator output for provision of an auxiliary power output, whereby, e.g., a 50 Hz or 60 Hz three-phase voltage output may be provided.

The housing 10 also has a connector 46 connected to the frequency converter input for provision of an auxiliary power input. Typically, it is not allowed to run an engine in a hangar. The provision of an auxiliary power input makes the ground power unit according to the invention useful in a hangar also, since it may be supplied from a mains outlet in a hangar by connection of the outlet to the auxiliary power input.

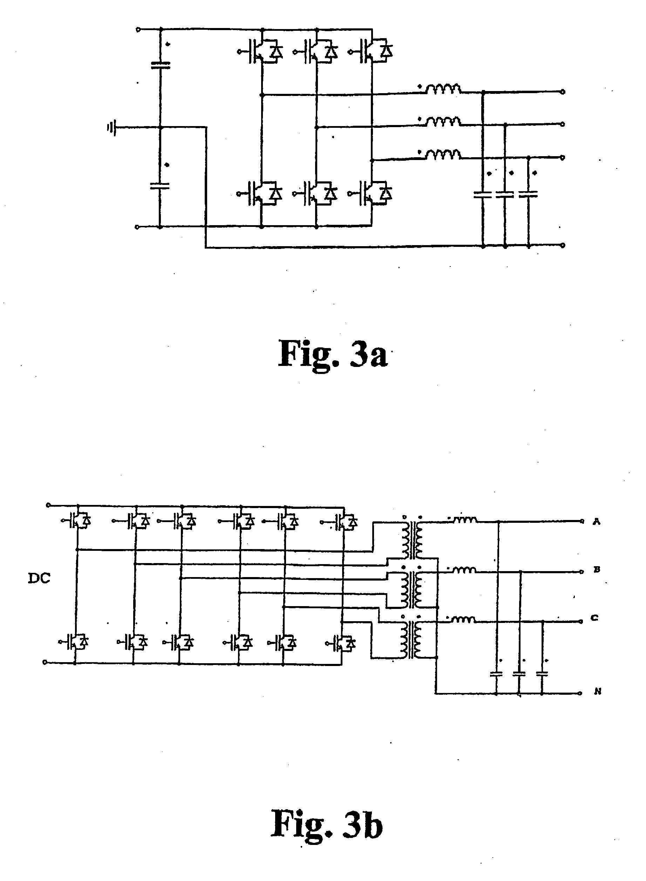

Fig. 3 schematically illustrates two circuit topologies of the frequency converter 18. The circuit topology is selected so that the individual phase outputs of the frequency converter are controllable independent of the other phase outputs. Thus, the most common inverter topologies with star coupled or triangular coupled 3-phase transformers cannot be used, because of the absence of a physical neutral. In such couplings an asymmetric load will cause the three phases of the output voltage to become correspondingly asymmetric. In the embodiment shown in Fig. 3a, a centre tap is provided from the DC voltage generated by the rectifier 22, and the switches generating the 400 Hz alternating output voltage are arranged for individual control of the output voltage of each of the output phases by proper pulse width modulation of the switches as is well known in the art. In an alternative topology shown in Fig. 3b, twelve switches are arranged in three H-bridges connected to the DC voltage without a centre tap for provision of individually controllable output phase voltages. As shown in Fig. 3b, the H-bridge, topology requires a transformer.

Still further, the controller is adapted for controlling the phase of the frequency converter output for synchronization with other ground power units.

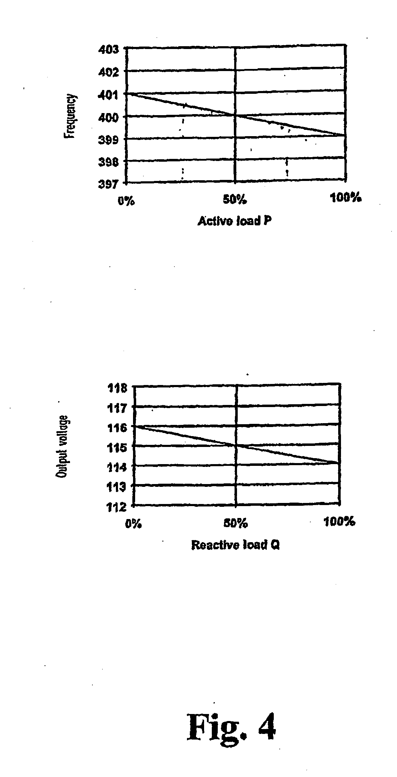

In the illustrated embodiment, simply parallel coupling of the outputs of the ground power units performs the synchronization. As already mentioned, it has been shown that active power flow between two units coupled in parallel is essentially caused by phase angle differences, while the reactive power flow is essentially caused by voltage amplitude differences. Thus, as shown in Fig. 4, in the illustrated embodiment, the controller is adapted to adjust the output voltage slightly as a function of the reactive load in such a way that the voltage decreases slightly and within allowable tolerances in response to an increase of the reactive load. Likewise, the individual controllers may be adapted to adjust the output frequency slightly as a function of the active load in such a way that the frequency decreases slightly and within allowable tolerances in response to an increase of the active load. In case that two parallel-coupled units do not share a load equally, the unit supplying the least amount of power will have the highest output voltage and the highest output frequency, and therefore it will try to take over the load, until equal load sharing is obtained.

## Claims

1. An integrated ground power unit comprising a housing (10) enclosing an engine drive (12),
a generator driven by the engine drive for generation of a first voltage of a first frequency at an output that is connected to
a frequency converter (18) for generation of a stabilized multi-phase alternating second voltage of a stabilized second frequency, and
a controller (30) for ground power unit management that is adapted to adjust the engine speed in response to a load change,
**characterized In that** the controller (30) Is adapted to adjust the engine speed in such a way that at least fuel consumption of the engine is substantially optimized,
the controller (30) further comprising a table stored in a memory of the controller (30) comprising fuel consumption values as a function of the load and engine speed,
the controller configured to adjust the engine speed to a value determined by a table look-up and to further optimize the fuel consumption at this value by further varying the engine speed and determining the fuel consumption at each new speed.

2. The ground power unit according to claim 1, wherein the generator is a DC generator for generation of a first voltage at DC.

3. The ground power unit according to claim 1, wherein the generator is an alternator (14) for generation of a first alternating voltage of a first frequency.

4. The ground power unit according to any of the preceding claims, wherein the controller (30) is adapted for controlling the engine (12) to run at a predetermined speed depending on the load.

5. The ground power unit according to any of the preceding claims, wherein the controller (30) is further adapted for changing the speed of the engine (12) upon connection of the load.

6. The ground power unit according to any of the preceding claims, wherein the controller (30) is adapted for controlling the speed of the engine (12) in response to the load in such a way that emission of contaminants from the engine is minimized.

7. The ground power unit according to any of the preceding claims, wherein the controller (30) is adapted for controlling the speed of the engine (12) in response to the load in such a way that acoustic noise emitted by the engine is minimized.

8. The ground power unit according to any of the preceding claims, wherein the controller (30) is adapted for adaptive control of the speed of the engine (12).

9. The ground power unit according to any of the preceding claims, wherein the engine (12) has a controllable cooling device (28), and wherein the controller (30) is further adapted for controlling the engine-cooling device.

10. The ground power unit according to any of the preceding claims, wherein the controller (30) is further adapted for individually controlling the engine (12), the generator, and the frequency converter (18) in such a way that the total efficiency of the ground power unit is substantially maximized.

11. The ground power unit according to any of the preceding claims, wherein the controller (30) is further adapted for individually controlling the engine (12), the generator, and the frequency converter (18) in such a way that emission of contaminants is substantially minimized.

12. The ground power unit according to any of the preceding claims, wherein the controller (30) is further adapted for individually controlling the engine (12), the generator, and the frequency converter In such a way that emission of acoustic noise is substantially minimized.

13. The ground power unit according to any of claims 3 to 12, wherein the housing (10) further comprises a connector (44) connected to the alternator output for provision of an auxillary power output.

14. The ground power unit according to any of the preceding claims, wherein the housing (10) further comprises a connector (46) connected to the frequency converter input for provision of an auxiliary power input.

15. The ground power unit according to any of the preceding claims, wherein the controller (30) is further adapted for individual phase regulation of each of the phases of the second voltage.

16. The ground power unit according to any of the preceding claims, wherein the controller (30) is further adapted for active suppression of harmonic distortion of the second voltage,

17. The ground power unit according to any of the preceding claims, wherein the controller (30) is further adapted to decrease the second voltage, and thereby the power consumed by the load, in response to a load Increase until the speed of the engine (12) has increased to a speed sufficient to provide the power required by the load whereby overload of the engine is substantially prevented.

18. The ground power unit according to any of the preceding claims, wherein the controller (30) Is further adapted for controlling the phase of the frequency converter output for no- break power transfer connection to the load.

19. The ground power unit according to any of the preceding claims, wherein the controller (30) is further adapted for controlling the phase of the frequency converter output for connection of the unit in parallel with other ground power units.

20. The ground power unit according to any of the preceding claims, wherein the frequency converter (18) is a direct AC - AC converter.

21. The ground power unit according to any of claims 1-19, wherein the frequency converter (18) further comprises
a rectifier (22) connected to the generator output for reception of the first voltage and provision of a rectified DC voltage that is supplied to an inverter (26) for provision of the second voltage of the second frequency.

22. The ground power unit according to claim 21, further comprising an energy reservoir (42) connected to the DC voltage.

23. The ground power unit according to claim 22, wherein the energy reservoir (42) has a capacity sufficient for supplying the required output power to the load, and wherein the controller (30) is further adapted for controlling the engine (12) between a running state and a stopped state intermittently.

## Patentansprüche

1. Integrierte Boden-Leistungseinheit, die Folgendes umfasst:
ein Gehäuse (10), das einen Maschinenantrieb (12) umgibt,
einen durch den Maschinenantrieb angetriebenen Generator für die Erzeugung einer ersten Spannung mit einer ersten Frequenz an einem Ausgang, der verbunden ist mit
einem Frequenzumsetzer (18) für die Erzeugung einer stabilisierten zweiten Mehrphasen-Wechselspannung mit einer stabilisierten zweiten Frequenz, und
eine Steuereinrichtung (30) für das Management der Boden-Leistungseinheit, die ausgelegt ist, um die Maschinendrehzahl in Reaktion auf eine Laständerung einzustellen,
**dadurch gekennzeichnet, dass** die Steuereinrichtung (30) ausgelegt ist, um die Maschinendrehzahl in der Weise einzustellen, dass wenigstens der Brennstoffverbrauch der Maschine im Wesentlichen optimiert ist,
wobei die Steuereinrichtung (30) ferner eine Tabelle, die in einem Speicher der Steuereinrichtung (30) gespeichert ist und die die Brennstoffverbrauchswerte als eine Funktion der Last und der Maschinendrehzahl umfasst, umfasst,
wobei die Steuereinrichtung konfiguriert ist, um die Maschinendrehzahl auf einen Wert einzustellen, der durch ein Nachschlagen in der Tabelle bestimmt wird, und um den Brennstoffverbrauch bei diesem Wert durch das weitere Ändern der Maschinendrehzahl und das Bestimmen des Brennstoffverbrauchs bei jeder neuen Drehzahl weiter zu optimieren.

2. Boden-Leistungseinheit nach Anspruch 1, wobei der Generator ein Gleichstromgenerator für die Erzeugung einer ersten Gleichspannung ist.

3. Boden-Leistungseinheit nach Anspruch 1, wobei der Generator ein Wechselstromgenerator (14) für die Erzeugung einer ersten Wechselspannung mit einer ersten Frequenz ist.

4. Boden-Leistungseinheit nach einem der vorhergehenden Ansprüche, wobei die Steuereinrichtung (30) ausgelegt ist, um die Maschine (12) zu steuern, um in Abhängigkeit von der Last mit einer vorgegebenen Drehzahl zu laufen.

5. Boden-Leistungseinheit nach einem der vorhergehenden Ansprüche, wobei die Steuereinrichtung (30) ferner ausgelegt ist, um die Drehzahl der Maschine (12) bei Verbindung mit der Last zu ändern.

6. Boden-Leistungseinheit nach einem der vorhergehenden Ansprüche, wobei die Steuereinrichtung (30) ausgelegt ist, um die Drehzahl der Maschine (12) in Reaktion auf die Last in der Weise zu steuern, dass die Emission von Schadstoffen aus der Maschine minimiert ist.

7. Boden-Leistungseinheit nach einem der vorhergehenden Ansprüche, wobei die Steuereinrichtung (30) ausgelegt ist, um die Drehzahl der Maschine (12) in Reaktion auf die Last in der Weise zu steuern, dass das durch die Maschine emittierte akustische Geräusch minimiert ist.

8. Boden-Leistungseinheit nach einem der vorhergehenden Ansprüche, wobei die Steuereinrichtung (30) für die adaptive Steuerung der Drehzahl der Maschine (12) ausgelegt ist.

9. Boden-Leistungseinheit nach einem der vorhergehenden Ansprüche, wobei die Maschine (12) eine steuerbare Kühlvorrichtung (28) besitzt und wobei die Steuereinrichtung (30) ferner ausgelegt ist, um die Maschinenkühlvorrichtung zu steuern.

10. Boden-Leistungseinheit nach einem der vorhergehenden Ansprüche, wobei die Steuereinrichtung (30) ferner ausgelegt ist, um die Maschine (12), den Generator und den Frequenzumsetzer (18) in der Weise einzeln zu steuern, dass der Gesamtwirkungsgrad der Boden-Leistungseinheit im Wesentlichen maximiert ist.

11. Boden-Leistungseinheit nach einem der vorhergehenden Ansprüche, wobei die Steuereinrichtung (30) ferner ausgelegt ist, um die Maschine (12), den Generator und den Frequenzumsetzer (18) in der Weise einzeln zu steuern, dass die Emission von Schadstoffen im Wesentlichen minimiert ist.

12. Boden-Leistungseinheit nach einem der vorhergehenden Ansprüche, wobei die Steuereinrichtung (30) ferner ausgelegt ist, um die Maschine (12), den Generator und den Frequenzumsetzer in der Weise einzeln zu steuern, dass die Emission von akustischen Geräuschen im Wesentlichen minimiert ist.

13. Boden-Leistungseinheit nach einem der Ansprüche 3 bis 12, wobei das Gehäuse (10) ferner einen Verbinder (44), der mit dem Ausgang des Wechselstromgenerators verbunden ist, für die Bereitstellung eines Hilfsleistungsausgangs umfasst.

14. Boden-Leistungseinheit nach einem der vorhergehenden Ansprüche, wobei das Gehäuse (10) ferner einen Verbinder (46), der mit dem Eingang des Frequenzumsetzers verbunden ist, für die Bereitstellung eines Hilfsleistungseingangs umfasst.

15. Boden-Leistungseinheit nach einem der vorhergehenden Ansprüche, wobei die Steuereinrichtung (30) ferner für die einzelne Phasenregelung jeder der Phasen der zweiten Spannung ausgelegt ist.

16. Boden-Leistungseinheit nach einem der vorhergehenden Ansprüche, wobei die Steuereinrichtung (30) ferner für die aktive Unterdrückung der harmonischen Verzerrung der zweiten Spannung ausgelegt ist.

17. Boden-Leistungseinheit nach einem der vorhergehenden Ansprüche, wobei die Steuereinrichtung (30) ferner ausgelegt ist, um in Reaktion auf eine Lastzunahme die zweite Spannung und dadurch die durch die Last verbrauchte Leistung zu verringern, bis die Drehzahl der Maschine (12) auf eine Drehzahl erhöht worden ist, die ausreichend ist, um die durch die Last benötigte Leistung bereitzustellen, wodurch die Überlastung der Maschine im Wesentlichen verhindert wird.

18. Boden-Leistungseinheit nach einem der vorhergehenden Ansprüche, wobei die Steuereinrichtung (30) ferner für die Steuerung der Phase der Frequenzumsetzerausgabe für eine unterbrechungsfreie Leistungsübertragungsverbindung mit der Last ausgelegt ist.

19. Boden-Leistungseinheit nach einem der vorhergehenden Ansprüche, wobei die Steuereinrichtung (30) ferner für die Steuerung der Phase der Frequenzumsetzerausgabe für die Parallelschaltung der Einheit mit anderen Boden-Leistungseinheiten ausgelegt ist.

20. Boden-Leistungseinheit nach einem der vorhergehenden Ansprüche, wobei der Frequenzumsetzer (18) ein direkter Wechselstrom-Wechselstrom-Umsetzer ist.

21. Boden-Leistungseinheit nach einem der Ansprüche 1-19, wobei der Frequenzumsetzer (18) ferner Folgendes umfasst:
einen Gleichrichter (22), der mit dem Generatorausgang verbunden ist, für den Empfang der ersten Spannung und die Bereitstellung einer gleichgerichteten Gleichspannung, die für die Bereitstellung der zweiten Spannung mit der zweiten Frequenz an einen Inverter (26) geliefert wird.

22. Boden-Leistungseinheit nach Anspruch 21, die ferner ein Energiereservoir (42) umfasst, das mit der Gleichspannung verbunden ist.

23. Boden-Leistungseinheit nach Anspruch 22, wobei das Energiereservoir (42) eine Kapazität besitzt, die ausreichend ist, um die erforderliche Ausgangsleistung an die Last zu liefern, und wobei die Steuereinrichtung (30) ferner für das intermittierende Steuern der Maschine (12) zwischen einem Betriebszustand und einem Haltezustand ausgelegt ist.

## Revendications

1. Groupe électrogène au sol intégré comprenant un boîtier (10) qui entoure un mécanisme d'entraînement à moteur (12),
un générateur entraîné par le mécanisme d'entraînement à moteur pour générer une première tension à une première fréquence au niveau d'une sortie qui est raccordé à
un convertisseur de fréquence (18) pour générer une deuxième tension alternative à plusieurs phases stabilisée à une deuxième fréquence stabilisée, et
un contrôleur (30) pour la gestion du groupe électrogène au sol qui est conçu pour ajuster la vitesse du moteur en réponse à un changement de charge, **caractérisé en ce que** le contrôleur (30) est conçu pour ajuster la vitesse du moteur de telle sorte qu'au moins la consommation de carburant du moteur est sensiblement optimisée,
le contrôleur (30) comprenant en outre une table stockée dans une mémoire du contrôleur (30) comprenant des valeurs de consommation de carburant en fonction de la charge et de la vitesse du moteur,
le contrôleur étant configuré pour ajuster la vitesse du moteur à une valeur déterminée par une recherche dans le tableau et pour optimiser encore plus la consommation de carburant à cette valeur en faisant varier encore plus la vitesse du moteur et en déterminant la consommation de carburant à chaque nouvelle vitesse.

2. Groupe électrogène au sol selon la revendication 1, dans lequel le générateur est un générateur CC pour générer une première tension continue.

3. Groupe électrogène au sol selon la revendication 1, dans lequel le générateur est un alternateur (14) pour générer une première tension alternative à une première fréquence.

4. Groupe électrogène au sol selon l'une quelconque des revendications précédentes, dans lequel le contrôleur (30) est conçu pour commander le moteur (12) pour qu'il tourne à une vitesse prédéterminée dépendant de la charge.

5. Groupe électrogène au sol selon l'une quelconque des revendications précédentes, dans lequel le contrôleur (30) est en outre conçu pour modifier la vitesse du moteur (12) lors de la connexion de la charge.

6. Groupe électrogène au sol selon l'une quelconque des revendications précédentes, dans lequel le contrôleur (30) est conçu pour commander la vitesse du moteur (12) en réponse à la charge de telle sorte que l'émission de contaminants par le moteur est réduite.

7. Groupe électrogène au sol selon l'une quelconque des revendications précédentes, dans lequel le contrôleur (30) est conçu pour commander la vitesse du moteur (12) en réponse à la charge de telle sorte que le bruit acoustique émis par le moteur est réduit.

8. Groupe électrogène au sol selon l'une quelconque des revendications précédentes, dans lequel le contrôleur (30) est conçu pour la commande adaptative de la vitesse du moteur (12).

9. Groupe électrogène au sol selon l'une quelconque des revendications précédentes, dans lequel le moteur (12) comprend un dispositif de refroidissement (28) commandable et dans lequel le contrôleur (30) est en outre conçu pour commander le dispositif de refroidissement du moteur.

10. Groupe électrogène au sol selon l'une quelconque des revendications précédentes, dans lequel le contrôleur (30) est en outre conçu pour commander individuellement le moteur (12), le générateur et le convertisseur de fréquence (18) de telle sorte que le rendement total du groupe électrogène au sol est sensiblement optimisé.

11. Groupe électrogène au sol selon l'une quelconque des revendications précédentes, dans lequel le contrôleur (30) est en outre conçu pour commander individuellement le moteur (12), le générateur et le convertisseur de fréquence (18) de telle sorte que l'émission de contaminants est sensiblement réduite.

12. Groupe électrogène au sol selon l'une quelconque des revendications précédentes, dans lequel le contrôleur (30) est en outre conçu pour commander individuellement le moteur (12), le générateur et le convertisseur de fréquence de telle sorte que l'émission de bruit acoustique est sensiblement réduite.

13. Groupe électrogène au sol selon l'une quelconque des revendications 3 à 12, dans lequel le boîtier (10) comprend en outre un connecteur (44) raccordé à la sortie de l'alternateur pour fournir une sortie d'énergie auxiliaire.

14. Groupe électrogène au sol selon l'une quelconque des revendications précédentes, dans lequel le boîtier (10) comprend en outre un connecteur (46) raccordé à l'entrée du convertisseur de fréquence pour fournir une entrée d'énergie auxiliaire.

15. Groupe électrogène au sol selon l'une quelconque des revendications précédentes, dans lequel le contrôleur (30) est en outre conçu pour la régulation de phase individuelle de chacune des phases de la deuxième tension.

16. Groupe électrogène au sol selon l'une quelconque des revendications précédentes, dans lequel le contrôleur (30) est en outre conçu pour la suppression active de la distorsion harmonique de la deuxième tension.

17. Groupe électrogène au sol selon l'une quelconque des revendications précédentes, dans lequel le contrôleur (30) est en outre conçu pour réduire la deuxième tension et ainsi la puissance consommée par la charge, en réponse à une augmentation de la charge jusqu'à ce que la vitesse du moteur (12) ait augmenté jusqu'à une vitesse suffisante pour délivrer la puissance requise par la charge, une surcharge du moteur étant ainsi sensiblement évitée.

18. Groupe électrogène au sol selon l'une quelconque des revendications précédentes, dans lequel le contrôleur (30) est en outre conçu pour commander la phase de la sortie du convertisseur de puissance pour une connexion de transfert de puissance sans interruption à la charge.

19. Groupe électrogène au sol selon l'une quelconque des revendications précédentes, dans lequel le contrôleur (30) est en outre conçu pour commander la phase de la sortie du convertisseur de puissance pour la connexion du groupe en parallèle avec d'autres groupes électrogènes au sol.

20. Groupe électrogène au sol selon l'une quelconque des revendications précédentes, dans lequel le convertisseur de fréquence (18) est un convertisseur CA/CA direct.

21. Groupe électrogène au sol selon l'une quelconque des revendications 1 à 19, dans lequel le convertisseur de fréquence (18) comprend en outre un redresseur (22) raccordé à la sortie du générateur pour la réception de la première tension et la fourniture d'une tension continue redressée qui est délivrée à un onduleur (26) pour fournir la deuxième tension à la deuxième fréquence.

22. Groupe électrogène au sol selon la revendication 21, comprenant en outre un réservoir d'énergie (42) raccordé à la tension continue.

23. Groupe électrogène au sol selon la revendication 22, dans lequel le réservoir d'énergie (42) possède une capacité suffisante pour délivrer la puissance de sortie requise à la charge et dans lequel le contrôleur (30) est en outre conçu pour commander le moteur (12) par intermittence entre un état de fonctionnement et un état à l'arrêt.
